# EUROPÄISCHE PATENTSCHRIFT

(11) **EP 0 869 605 B1**
(45) Veröffentlichungstag und Bekanntmachung des Hinweises auf die Patenterteilung: **21.11.2001**
(21) Anmeldenummer: 98810032.7
(22) Anmeldetag: 22.01.1998
(51) Int. Cl.: H02P 7/622, H02P 5/05, H02M 1/00

(54) **Verfahren zur Reduzierung von Rückwirkungen auf den Verlauf des einem Netz entnommenen Stroms bei induktiven Lasten und Vorrichtung zum Antreiben von Motoren nach diesem Verfahren**
Method of reducing retroactive effects on the profile of the current drawn from a network by inductive loads and motor drive device using this method
Procédé pour réduire les rétroactions sur le profil du courant tiré d'un réseau par des charges inductives et dispositif d'agencement de moteurs utilisant ce procédé

(30) Priorität: 06.03.1997 DE 19709264
(43) Veröffentlichungstag der Anmeldung: 07.10.1998
(73) Patentinhaber: HILTI Aktiengesellschaft, 9494 Schaan (LI)
(72) Erfinder: Nachbaur, Alexander, 6833 Fraxern (AT); Schaer, Roland, 9472 Grabs (CH); Wissmach, Walter, 80637 München (DE)
(74) Vertreter: Wildi, Roland

(56) Entgegenhaltungen:
- EP-A- 0 678 972
- WO-A-97/27665
- FR-A- 2 743 955

## Beschreibung

Die Erfindung betrifft ein Verfahren zur Reduzierung von Rückwirkungen auf den zeitlichen Verlauf des einem Netz entnommenen Stroms beim Betrieb einer induktiven Last über einen Gleichrichter mittels aktiver Filterung der Harmonischen einer Netzgrundschwingung über einen Boostkonverter.

Weiter betrifft die Erfindung eine Motor-Antriebsanordnung unter Anwendung des erfindungsgemäßen Verfahrens.

Bei einer Vielzahl von elektronischen Geräten, insbesondere bei Netzgeräten, Vorschaltgeräten. Antriebssteuerungen aller Art und dergleichen wird die Netzwechselspannung gleichgerichtet und beispielsweise mit einem Kondensator geglättet. Bei Belastung der erhaltenen Gleichspannung durch einen Verbraucher wird diese mehr oder weniger wellig und vom Netz wird ein Strom aufgenommen, dessen zeitlicher Verlauf stark von der Sinusform abweicht und einen relativ hohen Oberschwingungsanteil aufweist. Diese sogenannten Netzrückwirkungen hängen selbstverständlich von der Art der Last und deren Stromaufnahme ab. Die Normvorschriften VDE 0838 sowie EN 60555-2 geben Grenzwerte bzw. Grenzwertkurven vor für zulässige Oberschwingungsanteile in Abhängigkeit von dem Betriebsstrom.

Zur Reduzierung oder weitgehenden Beseitigung solcher Netzrückwirkungen sind unter anderem aktive Filterschaltungen bekannt, die zwischen einen Netzgleichrichter und die Last eingesetzt werden. Eine bekannte derartige aktive Filterschaltung ist in Fig. 6 dargestellt. Mittels eines sogenannten Boostkonverters und eines nicht gezeigten Leistungsfaktor-Regelkreises (PFC = Power Factor Control) ist es möglich, innerhalb zulässiger Leistungsgrenzen unabhängig von der möglicherweise variablen Last dem Netz einen nahezu sinusförmigen Strom zu entnehmen. Der Boostkonverter umfaßt eine in Reihe zwischen dem Ausgang eines Netzgleichrichters 6 mit Glättungskondensator 4 liegende Drossel 1 (Hochsetzstellerdrossel), eine dazu in Reihe liegende Diode 3 sowie in einem Ausgangs-Querzweig einen weiteren Glättungskondensator 5. Zwischen der Drossel 1 und der Anode der Diode 3 ist ein weiterer Querzweig mit einem elektronischen Schalter 2 vorgesehen, der durch den Leistungsfaktor-Regelkreis (PFC) betätigt wird. Zusätzlich wird, wie ebenfalls in Fig. 6 dargestellt, vor dem Netzgleichrichter 6 ein passives Vorfilter 7 angeordnet. Diese soweit beschriebene aktive und passive Netzrückwirkungs-Filterschaltung nach Fig. 6 ist beispielsweise in einem Fachaufsatz von M. Herfurth "Active Harmonic Filtering for Line Rectifiers of Higher Output Power" in Siemens Components 1/86, Seite 9 bis 13 beschrieben.

Ein Problem mit dem bekannten Netzrückwirkungsfilter ergibt sich bei räumlich beengten Einbauverhältnissen, wenn außerdem noch Überlegungen zu einem möglichst geringen Gerätegewicht etwa bei handgeführten Werkzeugmaschinen eine Rolle spielen, insbesondere deshalb, weil für die Drossel 1 eine relativ große und schwere Kernauslegung erforderlich ist, vor allem für höhere Netzaufnahmeleistungen. Bei der in Fig. 6 wiedergegebenen Schaltung führt die Drossel 1 etwa den gleichgerichteten Netzstrom. Dies bedeutet, daß sie magnetisch auf den Höchstwert des Stromes, d.h. auf Maximalamplitude plus überlagerter Welligkeit ausgelegt werden muß.

Daraus ergibt sich die der Erfindung zugrundeliegende Aufgabe, nämlich ein Verfahren und eine Schaltungsanordnung anzugeben, durch die sich bei Betrieb einer induktiven Last über einen Gleichrichter unerwünschte Rückwirkungen auf den zeitlichen Verlauf des dem Netz entnommenen Stroms sicher verhindern lassen, dies jedoch mit einer Filteranordnung die hinsichtlich technischem Aufwand und Gewicht deutliche Vorteile gegenüber bekannten Verfahren und aktiven Netzrückwirkungsfilterschaltungen bietet.

Die der Erfindung zugrundeliegende technische Lehre ist die Anwendung der Erkenntnis, daß die Funktion der Drossel 1 bei einem aktiven Netzrückwirkungsfilter etwa in der Schaltungsanordnung nach Fig. 6 von einer induktiven Last übernommen werden kann, ohne deren Funktion zu beeinträchtigen, bei einem Motor z.B. von der oder den Motorwicklung(en).

Das Verfahren zur Reduzierung von Rückwirkungen auf den zeitlichen Verlauf des einem Netz entnommenen Stroms beim Betrieb einer induktiven Last über einen Gleichrichter mittels aktiver Filterung der Harmonischen einer Netzgrundschwingung über einen Boostkonverter ist erfindungsgemäß also dadurch gekennzeichnet, daß als wenigstens teilweisen Ersatz einer für den Boostkonverter notwendigen Induktivität die induktive Last selbst verwendet wird.

Bei einem Motor als induktive Last, der über eine Schaltbrücke betrieben wird, kann erfindungsgemäß wenigstens eine Motorwicklung die Funktion der Induktivität für den Boostkonverter übernehmen, wobei die notwendige Ansteuerung in die Schaltbrücke integriert werden kann.

Weitere Ausführungsarten des erfindungsgemäßen Verfahrens sind in den abhängigen Verfahrensansprüchen definiert.

Nach dem erfindungsgemäßen Verfahren arbeitende Boostkonverter, die verschiedene Motoren antreiben können, sind in den unabhängigen Anordnungsansprüchen definiert.

Die Erfindung und vorteilhafte Einzelheiten werden nachfolgend unter Bezug auf die Zeichnung in beispielsweisen Ausführungsformen näher erläutert. Es zeigen:
- **Fig. 1**: ein Schaltbild einer Stromversorgungsschaltung mit Gleichrichterkreis und erfindungsgemäßem Boostkonverter für Motoren, bei denen die Funktion der Drossel von einer Motorwicklung übernommen wird,
- **Fig. 2**: ein Schaltbild einer Stromversorgungsschaltung mit Gleichrichterkreis und erfindungsgemäßem Boostkonverter für Motoren, bei denen die Funktion der Drossel von zwei Motorwicklungen übernommen wird,
- **Fig. 3**: ein Schaltbild einer Stromversorgungsschaltung mit Gleichrichterkreis und erfindungsgemäßem Boostkonverter mit Hilfsdrossel für Motoren, bei denen die Funktion der Drossel teilweise von einer Motorwicklung übernommen wird,
- **Fig. 4**: ein Schaltbild einer Stromversorgungsschaltung mit Gleichrichterkreis und erfindungsgemäßem Boostkonverter mit Hilfsdrossel für Motoren, bei denen die Funktion der Drossel teilweise von zwei Motorwicklungen übernommen wird,
- **Fig. 5**: ein Schaltbild einer vereinfachten Stromversorgungsschaltung mit Gleichrichterkreis und erfindungsgemäßem Boostkonverter mit Hilfsdrossel für Motoren, bei denen die Funktion der Drossel teilweise von zwei Motorwicklungen übernommen wird, und
- **Fig. 6**: das bereits erläuterte Prinzipschaltbild einer herkömmlichen Stromversorgungsschaltung mit Gleichrichterkreis. Boostkonverter und Vorfilter.

In den Figuren sind gleiche Bauelemente mit den gleichen Referenzzeichen versehen.

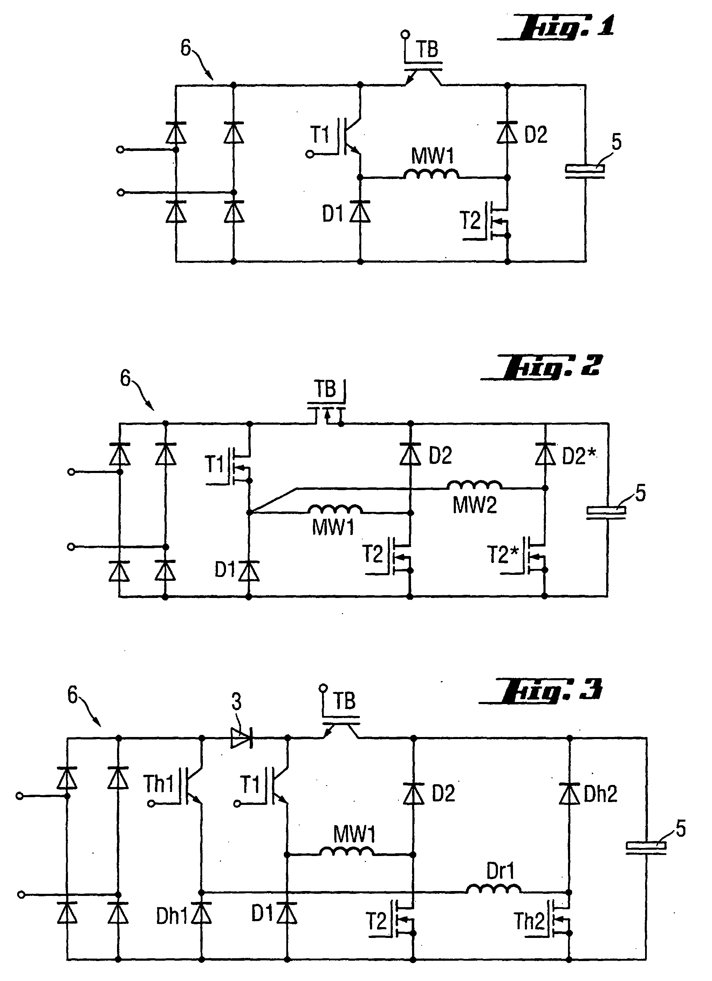

Die Figur 1 zeigt ein Schaltbild einer Stromversorgungsschaltung mit Gleichrichterkreis 6 und erfindungsgemäßem Boostkonverter für Motoren, bei denen die Funktion der Drossel von einer Motorwicklung MW1 übernommen wird.

Die Motorwicklung MW1 des Motors wird über eine Schaltbrücke angetrieben, die als ersten Zweig eine Reihenschaltung einer ersten Diode D1 und eines an diese kathodenseitig mit dem Emitter angeschlossenen ersten Transistors T1 enthält. Die erste Diode D1 ist anodenseitig mit Masse und der Kollektor des ersten Transistors T1 ist mit der Versorgungsspannung verbunden. Die Basis des ersten Transistors T1 ist mit einer nicht gezeigten Steuerschaltung verbunden. Als zweiten Zweig weist die Schaltbrücke eine Reihenschaltung einer zweiten Diode D2 und eines über den Kollektor an diese anodenseitig angeschlossenen zweiten Transistors T2 auf. Die zweite Diode D2 ist mit ihrer Kathode über die Kollektor-Emitter Strecke eines Transistors TB mit der Versorgungsspannung und der zweite Transistor mit seinem Emitter mit Masse verbunden. Die Basis des zweiten Transistors T2 ist auch mit der nicht gezeigten Steuerschaltung verbunden. Die Motorwicklung MW1 greift die zwischen dem Verbindungspunkt des ersten Transistors T1 und der ersten Diode D1 und dem Verbindungspunkt des zweiten Transistors T2 und der zweiten Diode D2 liegende Brückenspannung ab. Der Transistor TB wird ebenfalls - wie der erste Transistor T1 und der zweite Transistor T2 - über seine Basis von der nicht gezeigten Steuerschaltung angesteuert. Der Boostkonverter weist weiter einen Kondensator 5 auf, der parallel zu dem aus der zweiten Diode D2 und dem zweiten Transistor T2 bestehenden Zweig der Schaltbrücke geschaltet ist.

In dieser Ausführung wird die Motorwicklung MW1 in einer ersten Phase über den ersten Transistor T1, den zweiten Transistor T2 und den Transistor des Boostkonverters TB mit der hohen Kondensatorspannung des Kondensators 5 magnetisiert. Bei abgeschlossener Magnetisierung sperrt in einer zweiten Phase der Transistor TB des Boostkonverters, während der zweite Transistor T2 durch die Steuerschaltung pulsbreitenmoduliert getaktet wird und der erste Transistor T1 leitend ist. In dieser Phase wird die Motorwicklung MW1 also zur Leistungsfaktorkorrektur benutzt. Zur Entmagnetisierung sperren die drei Transistoren, wodurch der Strom der Motorwicklung MW1 in einer dritten Phase über die beiden Dioden D1 und D2 und den Kondensator 5 freilaufen kann und die Motorwicklung MW1 somit entmagnetisiert wird. Die Ansteuerung des ersten Transistors T1, des. zweiten Transistors T2 und des Transistors TB erfolgt direkt über die Steuerschaltung.

Die Figur 2 zeigt ein Schaltbild einer Stromversorgungsschaltung mit Gleichrichterkreis 6 und erfindungsgemäßem Boostkonverter für Motoren, bei denen die Funktion der Drossel von zwei Motorwicklungen MW1, MW2 übernommen wird.

Im Unterschied zur Figur 1 werden die Motorwicklungen MW1, MW2 des Motors über eine Schaltbrücke angetrieben, die zwei parallel geschaltete zweite Zweige aufweist, wobei eine Motorwicklung MW1, MW2 jeweils die zwischen dem Verbindungspunkt des ersten Transistors T1 und der ersten Diode D1 und dem Verbindungspunkt des jeweiligen zweiten Transistors T2, T2* und der jeweiligen zweiten Diode D2, D2* liegende Brükkenspannung abgreift. Der zweite Transistor T2* wird ebenfalls, wie der andere zweite Transistor T2, über seine Basis von der nicht gezeigten Steuerschaltung angesteuert.

In dieser Ausführung wird die Motorwicklung MW1 über den ersten Transistor T1, den zweiten Transistor T2 und den Transistor TB mit der hohen Kondensatorspannung des Kondensators 5 magnetisiert, während der Strom in der Motorwicklung MW2 über den Transistor T1, die Diode D2* und den Transistor TB freilaufen kann, wodurch sie entmagnetisiert wird. Entsprechend wird die Motorwicklung MW2 über den ersten Transistor T1, den anderen zweiten Transistor T2* und den Transistor des Boostkonverters TB mit der hohen Kondensatorspannung des Kondensators 5 magnetisiert, während der Strom in der Motorwicklung MW1 über den Transistor T1, die Diode D2 und den Transistor TB freilaufen kann, wodurch sie entmagnetisiert wird. Die zweiten Transistoren T2 und T2* werden abwechslungsweise dann pulsbreitenmoduliert getaktet, wenn die jeweilige durch sie angesteuerte Motorwicklung MW1, MW2 magnetisiert ist, wodurch die Motorwicklungen MW1, MW2 zur Leistungsfaktorkorrektur benutzt werden.

Besonders vorteilhaft ist bei diesen beiden Schaltungsvarianten, daß die Auslegung der nicht gezeigten Steuerschaltung keinen zusätzlichen großen steuer- und regelungstechnischen Aufwand erfordert.

Die Figur 3 zeigt ein Schaltbild einer Stromversorgungsschaltung mit Gleichrichterkreis 6 und erfindungsgemäßem Boostkonverter für Motoren, bei denen die Funktion der Drossel von einer Motorwicklung MW1 und einer Hilfsdrossel Dr1 übernommen wird.

Zusätzlich zu der in der Figur 1 gezeigten Schaltungsvariante ist in dieser Schaltung eine dritte Diode 3, die in Reihe in Durchflußrichtung zwischen die Versorgungsspannung und die den Motor antreibende Schaltbrücke geschaltet ist, und eine Schaltbrücke vorhanden, deren Brükkenspannung von der Hilfsdrossel Dr1 abgegriffen wird. Diese Schaltbrücke weist als ersten Zweig eine Reihenschaltung einer vierten Diode Dh1 und eines an diese kathodenseitig mit dem Emitter angeschlossenen vierten Transistors Th1 auf. Die vierte Diode Dh1 ist anodenseitig mit Masse und der Kollektor des vierten Transistors Th1 ist mit dem Verbindungspunkt zwischen der Versorgungsspannung und der Anode der dritten Diode 3 verbunden. Als zweiten Zweig weist die Schaltbrücke eine Reihenschaltung einer fünften Diode Dh2 und eines über den Kollektor an diese anodenseitig angeschlossenen fünften Transistors Th2 auf. Die fünfte Diode Dh2 ist mit ihrer Kathode über die Kollektor-Emitter Strecke des dritten Transistors TB des Boostkonverters mit der Versörgungsspannung und der fünfte Transistor Th2 mit seinem Emitter mit Masse verbunden. Die Hilfsdrossel Dr1 greift die zwischen dem Verbindungspunkt des vierten Transistors Th1 und der vierten Diode Dh 1 und dem Verbindungspunkt des fünften Transistors Th2 und der fünften Diode Dh2 liegende Brückenspannung ab. Der vierte Transistor Th1 und der fünfte Transistor Th2 werden ebenfalls, wie der erste Transistor T1 und der zweite Transistor T2, über ihre Basis von der nicht gezeigten Steuerschaltung angesteuert.

In dieser Ausführung wird die Motorwicklung MW1 1 wie in der Schaltungsvariante der Figur 1 geschaltet. Während der Pulspausen des Motorstroms wird die Hilfsdrossel Dr1 über den vierten Transistor Th1 und den fünften Transistor Th2, der pulsbreitenmoduliert getaktet wird, magnetisiert.

Durch die Aufteilung der Leistungsfaktor-Regelfunktion auf die Motorwicklung MW1 und die Hilfsdrossel Dr1 kann die Hilfsdrossel Dr1 im Vergleich mit einer Drossel eines herkömmlichen Boostkonverters für einen um 30% kleineren Strom ausgelegt werden. Weiter kann ein benötigtes Vorfilter, das nicht gezeigt ist, wesentlich kleiner ausgelegt werden als in den zuvor beschriebenen Lösungen ohne Hilfsdrossel Dr1.

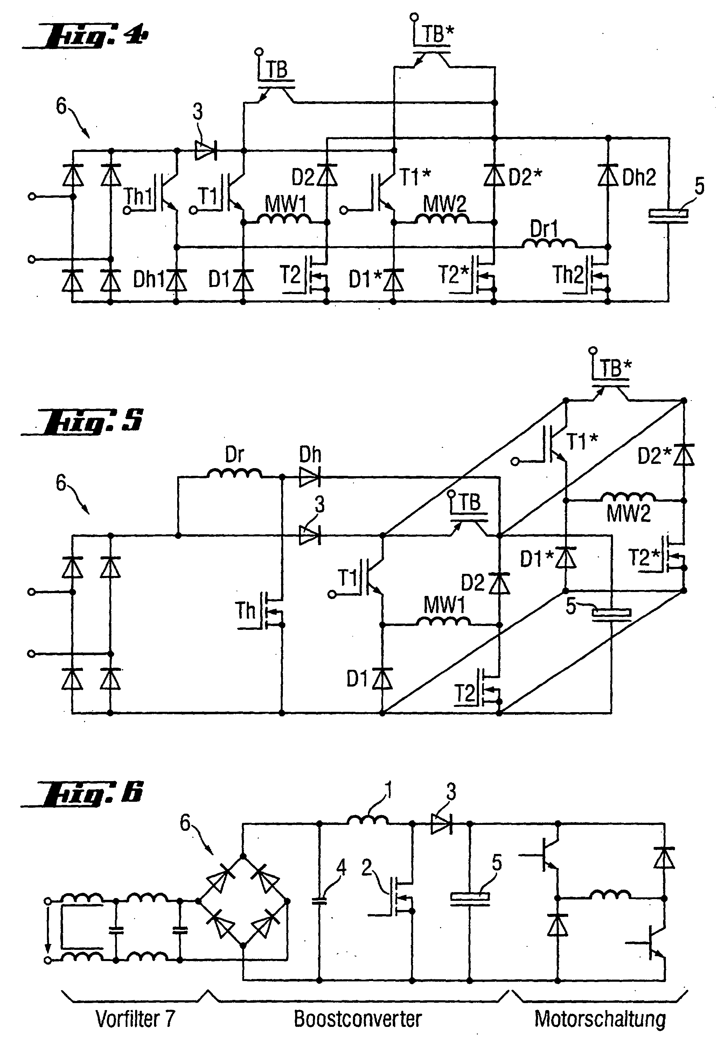

Die Figur 4 zeigt ein Schaltbild einer Stromversorgungsschaltung mit Gleichrichterkreis 6 und erfindungsgemäßem Boostkonverter mit Hilfsdrossel Dr1 für Motoren, bei denen die Funktion der Drossel zu einem großen Teil von zwei Motorwicklungen MW1, MW2 übernommen wird.

Im Unterschied zu der in der Figur 3 gezeigten Ausführungsform wird der Schaltbrücke zum Antreiben der Motorwicklung MW1 und dem dritten Transistor TB hier eine zweite Schaltbrücke zum Antreiben einer zweiten Motorwicklung MW2 und ein zweiter dritter Transistor TB* parallel geschaltet. Die beiden Motorwicklungen MW1 und MW2 sind also identisch beschaltet. Die Transistoren T1* und T2* der zweiten Schaltbrücke und der zweite dritte Transistor TB* werden entsprechend den jeweils korrespondierenden Transistoren T1, T2 und TB angesteuert.

Die Motorwicklungen MW1 und MW2 werden wie in der in Figur 2 gezeigten Ausführungsform geschaltet. Während der Magnetisierung der Motorwicklungen MW1 und MW2 wird die Hilfsdrossel Dr1 über den vierten Transistor Th 1 und den fünften Transistor Th2, der pulsbreitenmoduliert getaktet wird, ebenfalls magnetisiert.

Während die Motorwicklung MW1 über den ersten Transistor T1, den zweiten Transistor T2 und den Transistor TB mit der hohen Kondensatorspannung des Kondensators 5 magnetisiert wird, kann der Strom in der Motorwicklung MW2 über den Transistor T1*, die Diode D2* und den Transistor TB langsam freilaufen, oder die Motorwicklung MW2 kann über die Dioden D1*, D2* und den Kondensator 5 schnell entmagnetisiert werden. Entsprechend kann der Strom in der Motorwicklung MW1 über den Transistor T1, die Diode D2 und den Transistor TB* freilaufen oder die Motorwicklung MW1 kann über die Dioden D1, D2 und den Kondensator 5 schnell entmagnetisiert werden, während die Motorwicklung MW2 über den ersten Transistor T1* und den zweiten Transistor T2* der zweiten Schaltbrücke sowie den Transistor TB* mit der hohen Kondensatorspannung des Kondensators 5 magnetisiert wird.

Durch die Aufteilung der Leistungsfaktor-Regelfunktion auf die Motorwicklungen MW1 und MW2 und die Hilfsdrossel Dr1 kann die Hilfsdrossel Dr1 im Vergleich mit einer Drossel eines herkömmlichen Boostkonverters für einen um 70% kleineren Strom ausgelegt werden. Weiter kann ein benötigtes Vorfilter, das nicht gezeigt ist, wesentlich kleiner ausgelegt werden als in den zuvor beschriebenen Lösungen ohne Hilfsdrossel Dr1.

Die Ausführungsform gemäß der Figur 2 kann mit Hilfe weiterer elektronischer Schalter (TB* und T1*) auch entsprechend der Ausführungsform der Figur 4 so beschaltet werden, daß die jeweiligen Motorwicklungen auch bei eingeschaltetem (oder leitendem) Transistor TB zur Entmagnetisierung nicht über den Transistor TB freilaufen, sondern über den Kondensator (5) schnell entmagnetisiert werden.

Die zuvor beschriebenen Schaltungsvarianten können auch dahingehend abgeändert werden, daß der vierte Transistor Th1 durch einen Kurzschluß und die vierte Diode Dh durch einen Leerlauf ersetzt werden. Diese Schaltungsvariante ist für die in der Figur 4 dargestellte Ausführungsform in der Figur 5 dargestellt.

Weiter ist für jede der zuvor aufgeführten Schaltungsvarianten eine Vereinfachung dahingehend möglich, daß die jeweilige erste Diode D1; D1, D1* durch einen Leerlauf ersetzt wird.

## Patentansprüche

1. Verfahren zur Reduzierung von Rückwirkungen auf den zeitlichen Verlauf des einem Netz entnommenen Stroms beim Betrieb einer induktiven Last über einen Gleichrichter mittels aktiver Filterung der Harmonischen einer Netzgrundschwingung über einen Boostkonverter, **dadurch gekennzeichnet, daß** als wenigstens teilweisen Ersatz einer für den Boostkonverter notwendigen Induktivität die induktive Last selbst verwendet wird.

2. Verfahren nach Anspruch 1 bei dem die Last ein Motor ist, der über eine Schaltbrücke getrieben wird, **dadurch gekennzeichnet, daß** wenigstens eine Motorwicklung (MW1; MW1, MW2) als Induktivität für den Boostkonverter verwendet wird.

3. Verfahren nach Anspruch 2, **dadurch gekennzeichnet, daß** die Funktion des Boostkonverters in die den Motor treibende Schaltbrücke und in den Motor integriert wird, wobei eine Motorwicklung (MW1) als Induktivität für den Boostkonverter verwendet wird.

4. Verfahren nach Anspruch 3, **dadurch gekennzeichnet, daß** die Motorwicklung (MW1) in einer ersten Phase mit einer Kondensatorspannung eines Kondensators (5) magnetisiert, in einer zweiten Phase über einen elektronischen Schalter (T2) zur Leistungsfaktorkorrektur benutzt, und in einer dritten Phase entmagnetisiert wird.

5. Verfahren nach Anspruch 2, **dadurch gekennzeichnet, daß** die Funktion des Boostkonverters in die den Motor treibende Schaltbrücke und in den Motor integriert wird, wobei wenigstens zwei Motorwicklungen (MW1, MW2) die Induktivität ersetzen.

6. Verfahren nach Anspruch 5, **dadurch gekennzeichnet, daß** eine Motorwicklung (MW1) in einer ersten Phase mit einer Kondensatorspannung eines Kondensators (5) magnetisiert wird, während alle anderen Motorwicklungen (MW2) freilaufen und fortlaufend eine andere Motorwicklung (MW2, MW1) in einer nächsten Phase mit der Kondensatorspannung des Kondensators (5) magnetisiert wird, während wiederum alle anderen Motorwicklungen (MW1, MW2) freilaufen, wobei die Motorwicklungen (MW1, MW2) über jeweils einen elektronischen Schalter (T2, T2*) abwechselnd dann zur Leistungsfaktorkorrektur benutzt werden, wenn sie magnetisiert sind.

7. Verfahren nach Anspruch 2, **dadurch gekennzeichnet, daß** die Funktion des Boostkonverters in die den Motor treibende Schaltbrücke und in den Motor integriert wird, wobei eine Motorwicklung (MW1) und eine Hilfsdrossel (Dr1) die Induktivität ersetzen.

8. Verfahren nach Anspruch 7, **dadurch gekennzeichnet, daß** die Motorwicklung (MW1) in einer ersten Phase mit einer Kondensatorspannung eines Kondensators (5) magnetisiert, in einer zweiten Phase über einen elektronischen Schalter (T2) zur Leistungsfaktorkorrektur benutzt, und in einer dritten Phase entmagnetisiert wird, wobei die Hilfsdrossel (Dr1) während der Pulspausen des Motorstroms pulsbreitenmoduliert magnetisiert wird.

9. Verfahren nach Anspruch 2, **dadurch gekennzeichnet, daß** die Funktion des Boostkonverters in die den Motor treibende Schaltbrücke und in den Motor integriert wird, wobei wenigstens zwei Motorwicklungen (MW1, MW2) und eine Hilfsdrossel (Dr1) die Induktivität ersetzen.

10. Verfahren nach Anspruch 9, **dadurch gekennzeichnet, daß** eine Motorwicklung (MW1) in einer ersten Phase mit einer Kondensatorspannung eines Kondensators (5) magnetisiert wird, während alle anderen Motorwicklungen (MW2) freilaufen können und fortlaufend eine andere Motorwicklung (MW2, MW1) in einer nächsten Phase mit der Kondensatorspannung des Kondensators (5) magnetisiert wird, während wiederum alle anderen Motorwicklungen (MW1, MW2) freilaufen können, wobei die Motorwicklungen (MW1, MW2) über jeweils einen elektronischen Schalter (T2, T2*) abwechselnd dann zur Leistungsfaktorkorrektur benutzt werden, wenn sie magnetisiert sind, und die Hilfsdrossel (Dr1) während der jeweiligen Magnetisierung der Motorwicklungen (MW1, MW2) pulsbreitenmoduliert magnetisiert wird.

11. Verfahren nach einem der Ansprüche 4, 6, 8 oder 10 **dadurch gekennzeichnet. daß** die jeweiligen Motorwicklungen (MW1, MW2) über den Kondensator (5) freilaufen können.

12. Verfahren nach einem der Ansprüche 4, 6, 8 oder 10 **dadurch gekennzeichnet, daß** die jeweiligen Motorwicklungen (MW1, MW2) über wenigstens einen elektronischen Schalter (TB, TB*) freilaufen können.

13. Boostkonverter zur Reduzierung von Rückwirkungen auf den zeitlichen Verlauf des einem Netz entnommenen Stroms beim leistungsfaktorgeregelten Betrieb eines Motors, dessen Motorwicklung/en (MW1; MW1, MW2) über eine Schaltbrücke getrieben wird/werden, deren erster Zweig wenigstens einen zwischen die Versorgungsspannung und die Motorwicklung/en (MW1; MW1, MW2) geschalteten ersten elektronischen Schalter (T1), aufweist, dessen Steueranschluß mit einer Steuerschaltung verbunden ist, und die als jeweiligen zweiten Zweig für jede Motorwicklung eine Reihenschaltung einer zweiten Diode (D2; D2, D2*) und eines über einen ersten Schaltanschluß an diese anodenseitig angeschlossenen zweiten elektronischen Schalters (T2; T2, T2*) aufweist, wobei die zweite Diode (D2; D2, D2*) kathodenseitig mit der Versorgungsspannung, der zweite elektronische Schalter (T2; T2, T2*) mit einem zweiten Schaltanschluß mit Masse und ein Steueranschluß des zweiten elektronischen Schalters (T2; T2, T2*) mit der Steuerschaltung verbunden ist, wobei die Motorwicklung/en (MW1; MW1, MW2) jeweils zwischen den ersten elektronischen Schalter (T1) und den Verbindungspunkt des zweiten elektronischen Schalters (T2; T2, T2*) mit der zweiten Diode (D2; D2, D2*) geschaltet ist/sind, **dadurch gekennzeichnet, daß** ein dritter elektronischer Schalter (TB) für jede Motorwicklung, der die Versorgungsspannung mit der Kathode der jeweiligen zweiten Diode (D2; D2, D2*) der Schaltbrücke verbindet und dessen Steueranschluß mit der Steuerschaltung verbunden ist, und ein Kondensator (5) vorgesehen sind, der parallel zu dem jeweiligen zweiten Zweig der Schaltbrücke geschaltet ist.

14. Boostkonverter nach Anspruch 13, **dadurch gekennzeichnet, daß** er weiter
eine dritte Diode (3), die den ersten elektronischen Schalter (T1) mit der Versorgungsspannung verbindet, und
eine Hilfsdrossel (Dr1) enthält, die zwischen Versorgungsspannung und den Verbindungspunkt einer aus einer fünften Diode (Dh2) und einem mit dieser anodenseitig über einen ersten Schaltanschluß verbundenen fünften elektronischen Schalter (Th2) bestehenden Reihenschaltung geschaltet ist, wobei die fünfte Diode (Dh2) kathodenseitig mit der Kathode jeder zweiten Diode (D2; D2, D2*), der fünfte elektronische Schalter (Th2) mit einem zweiten Schaltanschluß mit Masse und ein Steueranschluß des fünften elektronischen Schalters (Th2) mit der Steuerschaltung verbunden ist.

15. Boostkonverter nach Anspruch 13, **dadurch gekennzeichnet, daß**
eine dritte Diode (3) vorhanden ist, die den jeweiligen ersten elektronischen Schalter (T1, T1*) mit der Versorgungsspannung verbindet, wobei der jeweilige dritte elektronische Schalter (TB, TB*) für jede Motorwicklung über die dritte Diode (3) die Versorgungsspannung mit der Kathode der jeweiligen zweiten Diode (D2, D2*) jeder Schaltbrücke verbindet, dessen Steueranschluß mit einer Steuerschaltung verbunden ist,
der Kondensator (5) parallel zu dem aus der jeweiligen zweiten Diode (D2. D2*) und dem jeweiligen zweiten elektronischen Schalter (T2, T2*) bestehenden Zweig jeder Schaltbrücke geschaltet ist, und
eine Hilfsdrossel (Dr1) zwischen die Versorgungsspannung und den Verbindungspunkt einer aus einer fünften Diode (Dh2) und einem mit dieser anodenseitig über einen ersten Schaltanschluß verbundenen fünften elektronischen Schalter (Th2) bestehenden Reihenschaltung geschaltet ist, wobei die fünfte Diode (Dh2) kathodenseitig mit den Kathoden der jeweiligen zweiten Dioden (D2, D2*), der fünfte elektronische Schalter (Th2) mit einem zweiten Schaltanschluß mit Masse und ein Steueranschluß des fünften elektronischen Schalters (Th2) mit der Steuerschaltung verbunden ist.

16. Boostkonverter nach Anspruch 14 oder 15, **dadurch gekennzeichnet, daß** die Hilfsdrossel (Dr1) über einen vierten elektronischen Schalter (Th1), dessen Steueranschluß mit der Steuerschaltung verbunden ist, mit der Versporgungsspannung verbunden ist, und daß
eine vierte Diode (Dh1) mit ihrer Anode an Masse und mit ihrer Kathode an den Verbindungspunkt des vierten elektronischen Schalters (Th1) mit der Hilfsdrossel (Dr1) geschaltet ist.

17. Boostkonverter nach einem der Ansprüche 13 bis 16, **gekennzeichnet durch** eine jeweilige erste Diode (D1; D1, D1*), deren Kathode jeweils an den Verbindungspunkt des jeweiligen ersten Transistors (T1; T1, T1*) mit der jeweiligen Motorwicklung (MW1; MW1, MW1*) und deren Anode jeweils an Masse angeschlossen ist.

## Claims

1. Method of reducing retroactive effects on the temporal profile of current drawn from a network during operation of an inductive load via a rectifier by means of active filtering of the harmonics of a fundamental oscillation of the grid via a boost converter, **characterised in that** the inductive load is itself used as at least partial replacement of inductivity required for the boost converter.

2. Method according to Claim 1 in which the load is a motor which is driven via a switching bridge, **characterised in that** at least one motor winding (MW1; MW1, MW2) is used as inductivity for the boost converter.

3. Method according to Claim 2, **characterised in that** the function of the boost converter is integrated into the switching bridge which drives the motor and into the motor, and one motor winding (MW1) is used as inductivity for the boost converter.

4. Method according to Claim 3, **characterised in that** the motor winding (MW1) is in a first phase magnetised with a capacitor current of a capacitor (5), in a second phase used for power factor correction via an electronic switch (T2), and in a third phase de-magnetised.

5. Method according to Claim 2, **characterised in that** the function of the boost converter is integrated into the switching bridge which drives the motor and into the motor, and at least two motor windings (MW1, NW2) replace the inductivity.

6. Method according to Claim 5, **characterised in that** in a first phase a motor winding (MW1) is magnetised with a capacitor current of a capacitor (5) whilst all other motor windings (MW2) are idling and another motor winding (MW2, MW1) is in a subsequent phase continuously magnetised with the capacitor current of the capacitor (5) whilst again all other motor windings (MW1, MW2) are idling, and the motor windings (MW1, MW2) are used alternately via a respective electronic switch (T2, T2*) for power factor correction when they are magnetised.

7. Method according to Claim 2, **characterised in that** the function of the boost converter is integrated into the switching bridge with drives the motor and into the motor, and one motor winding (MW1) and one auxiliary throttle (Dr1) replace the inductivity.

8. Method according to Claim 7, **characterised in that** the motor winding (MW1) is in a first phase magnetised with a capacitor current of a capacitor (5), in a second phase used via an electronic switch (T2) for power factor correction, and in a third phase demagnetised, and during the pulse pauses of the motor current the auxiliary throttle (Dr1) is pulse-width modulated.

9. Method according to Claim 2, **characterised in that** the function of the boost converter is integrated into the switching bridge which drives the motor and into the motor, and at least two motor windings (MW1, MW2) and an auxiliary throttle (Dr1) replace the inductivity.

10. Method according to Claim 9, **characterised in that** a motor winding (MW1) is in a first phase magnetised with a capacitor current of a capacitor (5) whilst all other motor windings (MW2) can idle, and another motor winding (MW2, MW1) is in a subsequent phase continuously magnetised with the capacitor current of a capacitor (5) whilst again all other motor windings (MW1, MW2) can idle, and the motor windings (MW1, MW2) are alternately used via a respective electronic switch (T2, T2*) for power factor correction when they are magnetised, and the auxiliary throttle (Dr1) is during respective magnetisation of the motor windings (MW1, MW2) pulse-width modulated.

11. Method according to one of Claims 4, 6, 8 or 10, **characterised in that** the respective motor windings (MW1, MW2) can idle via the capacitor (5).

12. Method according to one of Claims 4, 6, 8 or 10, **characterised in that** the respective motor windings (MW1, MW2) can idle via at least one electronic switch (TB, TB*).

13. Boost converter for reducing retroactive effects on the temporal profile of current drawn from a grid during power-factor controlled operation of a motor the motor winding(s) (MW1; MW1, MW2) of which is/are driven via a switching bridge, the first branch of which comprises at least one first electronic switch (T1) connected between the supply current and the motor winding(s) (MW1; MW1, MW2) and the control connection of which is linked to a control circuit, and which comprises as respective second branch for each motor winding a series arrangement of a second diode (D2; D2, D2*) and a second electronic switch (T2; T2, T2*) which is on the side of the anode connected thereto via a first switching connection, and the second diode (D2; D2, D2*) is on the side of the cathode connected to the supply current, the second electronic switch (T2, T2, T2*) is connected with a second switching connection to mass and a control connection of the second electronic switch (T2; T2, T2*) to the control circuit, and the motor winding(s) (MW1; MW1, MW2) is/are switched respectively between the first electronic switches (T1) and the connecting point of the second electronic switch (T2;T2, T2*) to the second diode (D2; D2, D2*), **characterised in that** a third electronic switch (TB) for each motor winding which connects the supply current to the cathode of the respective second diode (D2; D2, D2*) of the switching bridge and the control connection of which is connected to the control circuit, and a capacitor (5) are provided which is connected parallel to the respective second branch of the switching bridge.

14. Boost converter according to Claim 13, **characterised in that** it also includes a third diode (3), which connects the first electronic switch (T1) to the supply current, and an auxiliary throttle (Dr1) which is connected between supply current and the connecting point of a series arrangement comprising a fifth diode (Dh2) and a fifth electronic switch (Th2) which is at the anode side connected thereto via a first connection, and the fifth diode (Dh2) is at the cathode side connected to the cathode of each second diode (D2; D2, D2*); the fifth electronic switch (Th2) is connected to a second switching connection to mass and a control connection of the fifth electronic switch (Th2) is connected to the control circuit.

15. Boost converter according to Claim 13, **characterised in that** there is a third diode (3) which connects the respective first electronic switch (T1, T1*) to the supply current, and the respective third electronic switch (TB, TB*) for each motor winding connects the supply current via the third diode (3) to the cathode of the respective second diode (D2, D2*) of each switching bridge the control connection of which is connected to a control circuit; the capacitor (5) is switched parallel to the branch of each switching bridge comprising the respective second diode (D2, D2*) and the respective second electronic switch (T2, T2*); and an auxiliary throttle (Dr1) is connected between the supply current and the connecting point of a series arrangement comprising a fifth diode (Dh2) and fifth electronic switch (Th2) connected thereto at the anode side via a first switching connection; and the fifth diode (Dh2) is at the cathode side connected to the cathodes of the respective second diodes (D2, D2*); the fifth electronic switch (Th2) is connected to a second switching connection to mass, and a control connection of the fifth electronic switch (Th2) is connected to a control circuit.

16. Boost converter according to Claim 14 or 15, **characterised in that** the auxiliary throttle (Dr1) is connected to the supply current via a fourth electronic switch (Th1) the control connection of which is connected to the control circuit; and a fourth diode (Dh1) is with its anode connected to mass and with its cathode to the connecting point of the fourth electronic switch (Th1) with auxiliary throttle (Dr1).

17. Boost converter according to one of Claims 13 to 16, **characterised by** a respective first diode (D1; D1, D1*), the cathode of which is respectively connected to the connecting point of the respective first transistor (T1; T1, T1*) with respective motor winding (MW1; MW1, MW1*), and its anode is respectively connected to mass.

## Revendications

1. Procédé pour réduire les rétroactions sur la variation dans le temps du courant tiré d'un réseau lors du fonctionnement d'une charge inductive par l'intermédiaire d'un redresseur au moyen d'un filtrage actif des harmoniques d'une oscillation fondamentale de réseau par l'intermédiaire d'un convertisseur survolteur, **caractérisé en ce que** la charge inductive elle-même est employée en remplacement au moins partiel d'une résistance inductive nécessaire au convertisseur survolteur.

2. Procédé selon la revendication 1 dans lequel la charge est un moteur qui est actionné par l'intermédiaire d'un circuit en pont, **caractérisé en ce qu'**au moins un enroulement de moteur (MW1 ; MW1, MW2) est employé comme résistance inductive pour le convertisseur survolteur.

3. Procédé selon la revendication 2, **caractérisé en ce que** la fonction d'un convertisseur survolteur est intégrée dans le circuit en pont actionnant le moteur et dans le moteur, un enroulement de moteur (MW1) étant employé comme résistance inductive pour le convertisseur survolteur.

4. Procédé selon la revendication 3, **caractérisé en ce que**, dans une première phase, l'enroulement de moteur (MW1) est magnétisé avec une tension de condensateur d'un condensateur (5), dans une deuxième phase est utilisé par l'intermédiaire d'un commutateur électronique (T2) pour la correction du facteur de puissance et, dans une troisième phase, démagnétisé.

5. Procédé selon la revendication 2, **caractérisé en ce que** la fonction du convertisseur survolteur est intégrée dans le circuit en pont actionnant le moteur et dans le moteur, au moins deux enroulements de moteur (MW1, MW2) remplaçant la résistance inductive.

6. Procédé selon la revendication 5, **caractérisé en ce que**, dans une première phase, un enroulement de moteur (MW1) est magnétisé avec une tension de condensateur d'un condensateur (5) tandis que tous les autres enroulements de moteur (MW2) tournent librement et, dans une phase suivante, un autre enroulement de moteur (MW2, MW1) est magnétisé en continu avec la tension de condensateur d'un condensateur (5) tandis qu'à nouveau tous les autres enroulements de moteur (MW1, MW2) tournent librement, les enroulements de moteur (MW1, MW2) étant alors utilisés en alternance, par l'intermédiaire de commutateurs électroniques respectifs (T2, T2*) pour la correction du facteur de puissance lorsqu'ils sont magnétisés.

7. Procédé selon la revendication 2, **caractérisé en ce que** la fonction du convertisseur survolteur est intégrée dans le circuit en pont actionnant le moteur et dans le moteur, un enroulement de moteur (MW1) et une bobine d'arrêt auxiliaire (Dr1) remplaçant la résistance inductive.

8. Procédé selon la revendication 7, **caractérisé en ce que**, dans une première phase, l'enroulement de moteur (MW1) est magnétisé avec une tension de condensateur d'un condensateur (5), dans une deuxième phase est utilisé par l'intermédiaire d'un commutateur électronique (T2) pour la correction du facteur de puissance et, dans une troisième phase, est démagnétisé, la bobine d'arrêt auxiliaire (Dr1) étant magnétisée avec modulation d'impulsion en durée pendant les intervalles d'impulsions.

9. Procédé selon la revendication 2, **caractérisé en ce que** la fonction du convertisseur survolteur est intégrée dans le circuit en pont actionnant le moteur et dans le moteur, au moins deux enroulements de moteur (MW1, MW2) et une bobine d'arrêt auxiliaire (Dr1) remplaçant la résistance inductive.

10. Procédé selon la revendication 9, **caractérisé en ce que**, dans une première phase, un enroulement de moteur (MW1) est magnétisé avec une tension de condensateur d'un condensateur (5) tandis que tous les autres enroulements de moteur (MW2) peuvent tournent librement et, dans une phase suivante, un autre enroulement de moteur (MW2, MW1) est magnétisé en continu avec la tension de condensateur d'un condensateur (5) tandis qu'à nouveau tous les autres enroulements de moteur (MW1, MW2) peuvent tourner librement, les enroulements de moteur (MW1, MW2) étant utilisés en alternance, par l'intermédiaire de commutateurs électroniques respectifs (T2, T2*) pour la correction du facteur de puissance lorsqu'ils sont magnétisés, et la bobine d'arrêt auxiliaire (Dr1) étant magnétisée avec modulation d'impulsion en durée pendant la magnétisation respective des enroulements de moteur (MW1, MW2).

11. Procédé selon l'une des revendications 4, 6, 8 ou 10, **caractérisé en ce que** les enroulements de moteur respectifs (MW1, MW2) peuvent tourner librement par l'intermédiaire du condensateur (5).

12. Procédé selon l'une des revendications 4, 6, 8 ou 10, **caractérisé en ce que** les enroulements de moteur respectifs (MW1, MW2) peuvent tourner librement par l'intermédiaire d'au moins un commutateur électronique (TB, TB*).

13. Convertisseur survolteur pour réduire les rétroactions sur la variation dans le temps du courant tiré d'un réseau lors du fonctionnement à facteur de puissance régulé d'un moteur dont le/s enroulement/s de moteur (MW1 ; MW1, MW2) est/sont actionné/s par l'intermédiaire d'un circuit en pont dont la première branche comporte au moins un premier commutateur électronique (T1), qui est connecté entre la tension d'alimentation et le/s enroulement/s de moteur (MW1 ; MW1, MW2) et dont la borne de commande est reliée à un circuit de commande, et qui comporte comme seconde branche respective pour chaque enroulement de moteur un montage en série d'une deuxième diode (D2 ; D2, D2*) et d'un deuxième commutateur électronique (T2 ; T2, T2*) relié côté anode à celle-ci par l'intermédiaire d'une première borne de commutation, la deuxième diode (D2 ; D2, D2*) étant reliée côté cathode à la tension d'alimentation, le deuxième commutateur électronique (T2 ; T2, T2*) étant relié à une deuxième borne de commutation avec masse, et une borne de commande du deuxième commutateur électronique (T2 ; T2, T2*) étant reliée au circuit de commande, le/s enroulement/s de moteur (MW1 ; MW1, MW2) étant relié/s chacun entre le premier commutateur électronique (T1) et le point de jonction du deuxième commutateur électronique (T2 ; T2, T2*) avec la deuxième diode (D2 ; D2, D2*), **caractérisé en ce qu'**il est prévu pour chaque enroulement de moteur un troisième commutateur électronique (TB), qui relie la tension d'alimentation à la cathode de la deuxième diode respective (D2 ; D2, D2*) du circuit en pont et dont la borne de commande est reliée au circuit de commande, et un condensateur (5) qui est connecté en parallèle avec la seconde branche respective du circuit en pont.

14. Convertisseur survolteur selon la revendication 13,
**caractérisé en ce qu'**il contient en outre
une troisième diode (3) qui relie le premier commutateur électronique (T1) à la tension d'alimentation, et
une bobine d'arrêt auxiliaire (Dr1) qui est connectée entre la tension d'alimentation et le point de jonction d'un montage en série constitué d'une cinquième diode (Dh2) et d'un cinquième commutateur électronique (Th2) relié avec celle-ci côté anode par l'intermédiaire d'une première borne de commutation, la cinquième diode (Dh2) étant reliée côté cathode avec la cathode de chaque deuxième diode (D2 ; D2, D2*), le cinquième commutateur électronique (Th2) étant relié à une deuxième borne de commutation avec masse, et une borne de commande du cinquième commutateur électronique (Th2) étant reliée au circuit de commande.

15. Convertisseur survolteur selon la revendication 13, **caractérisé en ce que**
il est prévu une troisième diode (3) qui relie le premier commutateur électronique respectif (T1, T1*) avec la tension d'alimentation, le troisième commutateur électronique respectif (TB, TB*) pour chaque enroulement de moteur reliant, par l'intermédiaire de la troisième diode (3), la tension d'alimentation avec la cathode de la deuxième diode respective (D2, D2*) de chaque circuit en pont, sa borne de commande étant reliée à un circuit de commande,
le condensateur (5) est connecté en parallèle à la branche de chaque circuit en pont constituée de la deuxième diode respective (D2, D2*) et du deuxième commutateur électronique respectif (T2, T2*), et
une bobine d'arrêt auxiliaire (Dr1) est connectée entre la tension d'alimentation et le point de jonction d'un montage en série constitué d'une cinquième diode (Dh2) et d'un cinquième commutateur électronique (Th2) relié à celle-ci côté anode par l'intermédiaire d'une première borne de commutation, la cinquième diode (Th2) étant reliée côté cathode à la cathode des deuxièmes diodes respectives (D2, D2*), le cinquième commutateur électronique (Th2) étant relié à une deuxième borne de commutation avec masse, et une borne de commande du cinquième commutateur électronique (Th2) étant relié au circuit de commande.

16. Convertisseur survolteur selon la revendication 14 ou 15, **caractérisé en ce que** la bobine d'arrêt auxiliaire (Dr1) est reliée à la tension d'alimentation par l'intermédiaire d'un quatrième commutateur électronique (Th1) dont la borne de commande est reliée au circuit de commande, et **en ce que**
une quatrième diode (Dh1) est reliée, avec son anode, à la masse et, avec sa cathode, au point de jonction du quatrième commutateur électronique (Th1) avec la bobine d'arrêt auxiliaire (Dr1).

17. Convertisseur survolteur selon l'une des revendications 13 à 16, **caractérisé par** une première diode respective (D1 ; D1, D1*) dont la cathode est connectée respectivement au point de jonction du premier transistor respectif (T1 ; T1, T1*) avec l'enroulement de moteur respectif (MW1 ; MW1, MW1*) et dont l'anode est connectée respectivement à la masse.
